# EUROPEAN PATENT SPECIFICATION

(11) **EP 1 744 223 B1**
(45) Date of publication and mention of the grant of the patent: **21.12.2011**
(21) Application number: 05015165.3
(22) Date of filing: 13.07.2005
(51) Int. Cl.: G03G 9/097, G03G 9/09, C09C 3/08, C09C 1/60, C09C 1/64

(54) **Method for preparing toner and the toner**
Toner und Herstellungsverfahren
Révélateur et procédé de fabrication

(43) Date of publication of application: 17.01.2007
(73) Proprietor: Eastman Kodak Company, Rochester, NY 14650-2201 (US)
(72) Inventor: Tyagi, Dinesh, Fairport NY 14450 (US); Schulze-Hagenest, Detlef, 24113 Molfsee (DE)
(74) Representative: Weber, Etienne Nicolas

(56) References cited:
- EP-A- 0 403 180
- EP-A- 1 266 946
- WO-A-91/04293
- WO-A-2005/076086
- DATABASE WPI Section Ch, Week 199735 Derwent Publications Ltd., London, GB; Class A89, AN 1997-376795 XP002325706 & JP 09 160298 A (RICOH KK) 20 June 1997 (1997-06-20)
- PATENT ABSTRACTS OF JAPAN vol. 007, no. 087 (P-190), 9 April 1983 (1983-04-09) & JP 58 014141 A (RICOH KK), 26 January 1983 (1983-01-26)
- PATENT ABSTRACTS OF JAPAN vol. 007, no. 087 (P-190), 9 April 1983 (1983-04-09) & JP 58 014142 A (RICOH KK), 26 January 1983 (1983-01-26)

## Description

The present invention relates to a toner and a process for preparing a toner, for reproduction of a metallic, preferably golden or silvery, hue by a printing process, especially for electrophotography.

Printing processes serve not only to reproduce and transmit objective information, but also to convey esthetic impressions, for example when coffee-table books are printed or else in pictorial advertising. An immense problem here is posed in particular by the reproduction of metallic hues. Metallic hues are only imperfectly reproducible by a color mixture formed from primary colors, especially the colors cyan, magenta, yellow, and black (CMYK). A gold tone is particularly difficult to reproduce by means of such a color mixture. It has therefore already been proposed to incorporate metallic pigments or particles in the printing ink in order that a metallic color may be brought about directly. But in the case of toners, where magnetic and/or electrical and especially electrostatic properties are decisive, this is particularly problematic, since metallic constituents may have an adverse effect on these properties. Yet there have already been proposals to imbue toners with metallic constituents. For instance, U.S. Patent No. 5,180,650, issued on January 19, 1993, discloses providing a toner composition, which contains lightly colored metallic constituents, such as copper, silver or gold for example, in a coating, which in turn has been provided with an over-coating comprised of a metal halide.

Document EP 1 266 946 A1 discloses a metallic powder coating composition for giving a metallic finish. Especially a metallic pigment is adhered to a resin that may contain carbon black. The appearance of prints in particular may be adversely affected by chemical reactions of the metallic constituents due to the halides, which can promote oxidations of the constituents for example. For instance, the tarnishing with which everyone is familiar from copper or silver objects may occur, making the metallic quality unattractive or disappear completely. Moreover, these toners are only lightly metallically colored, which is insufficient to reproduce a gold tone in printed matter. Further, when metallic constituents are incorporated in toners using conventional manufacturing processes, these metallic flakes are randomly oriented throughout the toner particles. This random orientation leads to the loss of metallic hue, and causes a dark appearance when such toners are fixed to a receiver sheet using heated rollers.

It is an object of the present invention to preserve a congeneric process and/or a congeneric toner with regard to its metallic hue and at the same time not to impair the essential properties of the toner for the printing process in which it is to be used, especially for electrophotography or electrography. It shall preferably be possible to fuse the toner to the printed stock in a non-contact manner, especially with the aid of microwaves, without disruption due to metallic constituents in the toner.

The invention provides a toner, as defined by claim 1, a metallic pigment for use in a toner as defined by claim 11 and a process for the preparation of toner as defined by claim 12. Further possible features appear in intervening and subsequent dependent claims.

In further developments of the present invention, the organic layer utilizes at least one aliphatic acid, stearic acid, at least one amide of at least one acid, at least one salt of at least one acid, at least one olefinic material and/or at least one natural or synthetic wax. However, the use of stearic acid could give rise to the problem that the stearic acid will plasticize the toner material, and so would need to be done with particular care. The organic layer may include at least one polymer organic layer, such as a polyester, over the silicate, titanate, or aluminate layer. The organic layer could also include any of the polymers that are typically used as toner resins, as described in more detail hereinbelow. In addition, the metallic pigment may have only the organic layer as a coating, which may include at least one polymer, such as polyester.

The organic layer contains a charge control agent that is added to the organic coating material used in the coating process. In a different embodiment the charge control agent will be applied on the surface of the organic coating. Charge control agents for the use in toners are described e.g. in the Handbook of Imaging Materials, Second Edition, Marcel Dekker, Inc., New York, Basel, ISBN: 0-8247-8903-2, p.180ff.

The organic layer may optionally contain a colorant as well. When the coating has an inherent color, this can lead to interesting color-varying effects with the metallic hue in a print or change the metallic hue as a whole. Optionally, the binder can be compounded with a colorant, i.e., a dye or pigment, either in the form of a pigment flush (a special mixture of pigment press cake and resin well-known to the art) or pigment-resin masterbatch, as well as any other desired addenda known to the art. If a developed image without modification of the original color of the pigment is desired, no colorant need be added. Normally, however, a colorant can be included and it can, in principle, be any of the materials mentioned in Colour Index, Vols. I and II, 2nd Edition (1987) or listed in the Pantone® Color Formula Guide, First Edition 2000-2001. The choice of colorants is described as well in e.g., proceedings of IS&T NIP 20: International Conference on Digital Printing Technologies, IS&T: The Society for Imaging Science and Technology, 7003 Kilworth Lane, Springfield, Virginia 22151 USA ISBN: 0-89208-253-4, p. 135. Carbon black can be especially useful while other colorants can include pigment blue, pigment red, and pigment yellow. Specific colorants can include copper phthalocyanine, and pigment blue sold under the trade designation LUPRETON BLUE SE1163. The amount of colorant, if used, can vary over a wide range, e.g., from about 1 to about 25, and preferably from about 3 to about 20 weight percent of the toner component. Combinations of colorants may be used as well.

The colorant may have the function of a charge control agent and vice versa.

Otherwise, the process of the present invention can conform to any well-known process for preparing dry toners wherein pigments are conventionally incorporated in a toner core, i.e., for example by compounding, classifying and/or grinding. Instead of embedding pigments in a toner core it is also possible, for example, to utilize a shell construction wherein a pigment is applied to the surface of a toner body, especially as part of a coating, optionally alone or mixed with other ingredients, for example with polymers, waxes, or charge control agents. Illustrative references are U.S. Patent No. 5,298,356, issued on March 29, 1994 and/or U.S. Patent No. 6,110,633, issued on August 29, 2000, the disclosures of which are hereby incorporated by reference thereto.

Finally the inventive toner maybe coated with an additional component on the surface consisting of hydrophobic fumed metal oxides like silica, aluminia, or titania in concentrations of about 0.1% to about 3%.

The toners may be alternatively produced by so-called chemical toner processes, called as well "chemically prepared toners", "polymerized toners" or "in situ toners". The toners are not produced by grinding but by controlled growth. Chemical process to be used are, among others, suspension polymerization (e.g., DE 4202461, DE 4202462); emulsion aggregation (e.g., U.S. Patent No. 5,604,076, issued on February 18, 1997); micro-encapsulation (e.g., DE 10011299); dispersion (e.g., U.S. Publication No. 2003/0087176 A1, published on May 8, 2003); or chemical milling (e.g., proceedings of IS&T NIP 17: International Conference on Digital Printing Technologies, IS&T: The Society for Imaging Science and Technology, 7003 Kilworth Lane, Springfield, Virginia 22151 USA ISBN: 0-89208-234-8, p. 345).

In a further development of the present invention, the pigment is made platelet shaped. This is particularly advantageous for its adduction to a surface of a (larger) toner material particle.

Preferably, the metallic pigment can be coated with the silicate with the aid of a so-called sol-gel process. This can provide a particularly thin coating. It can be envisaged to this end to use stearic acid as lubricant and/or that the pigment is dispersed in a mixture of ethanol, water and a silica, titania, or aluminia precursor. The silica precursor may be tetraethoxysilanes. The quantity of the silanes may of course be dependent on the particle size of the pigment. Preferably, a catalyst is used in addition.

In a further embodiment, the mixture is heated to speed a reaction in which the silica, titania, or aluminia precursor is hydrolyzed and reacts to form a silicate, titanate, or aluminate, which deposits as a thin film on the pigment. A filtration may then be carried out to filter off undesirable by-products, for example the catalyst, metal compounds, or stearic acid.

It is possible to carry out drying and evaporation of solvent residues to achieve a pulverulent residue as a substance, which contains the silicate-coated pigment.

Preferably, the silicate, titanate, or aluminate comprises about 2% to about 10% of the weight of the metallic pigment.

The toner material can be clear/colorless or transparent or have an inherent color. When the toner material has an inherent color, this can lead to interesting color-varying effects with the metallic hue in a print or change the metallic hue as a whole.

The invention, and its objects and advantages, will become more apparent in the detailed description of the preferred embodiments presented below.

In a preferred embodiment of the process according to the present invention, the pigment is about 7 µm in size and toner particles of the toner material are about 6-12 µm in size. As mentioned earlier, pigments may each be disposed on one surface of a toner particle of the toner material.

The organic layer may include or consist of a polymer. Useful polymers include vinyl polymers, such as homopolymers and copolymers of styrene. Styrene polymers include those containing 40 to 100 percent by weight of styrene, or styrene homologs, and from 0 to 40 percent by weight of one or more lower alkyl acrylates or methacrylates. Other examples include fusible styrene-acrylic copolymers that are covalently lightly crosslinked with a divinyl compound such as divinylbenzene. Binders of this type are described, for example, in U.S. Reissue Patent No. 31,072, which is incorporated in its entirety by reference wherein. Preferred binders comprise styrene and an alkyl acrylate and/or methacrylate, and the styrene content of the binder is preferably at least about 60% by weight.

Copolymers rich in styrene such as styrene butylacrylate and styrene butadiene are also useful as binders, as are blends of polymers. In such blends, the ratio of styrene butylacrylate to styrene butadiene can be 10:1 1 to 1:10. Ratios of 5:1 to 1:5 and 7:3 are particularly useful. Polymers of styrene butylacrylate and/or butylmethacrylate (30 to 80% styrene) and styrene butadiene (30 to 80% styrene) are also useful binders.

Styrene polymers include styrene, alpha-methylstyrene, para-chlorostyrene, and vinyl toluene. Alkyl acrylates or methylacrylates or monocarboxylic acids having a double bond selected from acrylic acid, methyl acrylate, 2-ethylhexyl acrylate, 2-ethylhexyl methacrylate, ethyl acrylate, butyl acrylate, dodecyl acrylate, octyl acrylate, phenylacrylate, methylacrylic acid, ethyl methacrylate, butyl methacrylate and octyl methacrylate and are also useful binders.

Also useful are condensation polymers such as polyesters and copolyesters of aromatic dicarboxylic acids with one or more aliphatic diols, such as polyesters of isophthalic or terephthalic acid with diols such as ethylene glycol, cyclohexane dimethanol, and bisphenols. Other useful resins include polyester resins, such as may be obtained by the co-polycondensation polymerization of a carboxylic acid component comprising a carboxylic acid having two or more valencies, an acid anhydride thereof or a lower alkyl ester thereof (e.g., fumaric acid, maleic acid, maleic anhydride, phthalic acid, terephthalic acid, trimellitic acid, or pyromellitic acid), using as a diol component a bisphenol derivative or a substituted compound thereof. Specific examples are described in U.S. Patent Nos. 5,120,631; 4,430,408; and 5,714,295, all incorporated herein by reference, and include propoxylated bisphenol - A fumarate, such as Finetone® 382 ES from Reichold Chemicals, formerly Atlac® 382 ES from ICI Americas Inc.

A useful binder can also be formed from a copolymer of a vinyl aromatic monomer with a second monomer selected from either conjugated diene monomers or acylate monomers such as alkyl acrylate and alkyl methacrylate.

Colorants, and if necessary, release agents, fluidity improvers, charge controlling agents, magnetic substances, and cross-linking agents may be added to this polymeric binder.

Colorants may include such pigments or dyes as carbon black, for example, nigrosine dye, aniline blue, red oxide, acetylene black, monoazo dye, diazo dye, quinacridone, anthraquinone dye, chalco oil blue, copper phthalocyanine, indanthrene blue, benzene yellow, chrome yellow pigment, ultramarine yellow, duPont oil red, indanthrene blue, permanent brown FG, brilliant scarlet, malachite green oxalate, lamp black, rose Bengal, pigment green B, rhodamine B, and solvent 35.

The colorant to be used in the present invention may be one or a mixture of known dyes or pigments including Carbon Black, Lamp Black, Iron Black, ultramarine blue, Aniline Blue, Phthalocyanine Blue, Phthalocyanine Green, Hansa Yellow G, Rhodamine 6G Lake, Chalcooil Blue, Chrome Yellow, Quinacridone, Benzidine Yellow, Rose Bengal, triarylmethane dyes, monoazo and disazo dyes.

The above-mentioned colorants include, for example, carbon black, Nigrosine dye (C.I. No. 50415B), Aniline Blue (C.I. No. 50405), Charco Oil Blue (C.I. No. Azoic Blue 3). Chrome Yellow (C.I. No. 14090), Ultramarine Blue (C.1. No. 77103), Du Pont Oil Red (C.I. No. 26105), Quinoline Yellow (C.I. No. 47005), Methylene Blue Chloride (C.I. No. 52015), Phthalocyanine Blue (C.I. No. 74160), Malachite Green Oxalate (C.I. No. 42000), Lump Black (C.I. No. 77266), Rose Bengale (C.I. No. 45435), the mixtures thereof. An addition rate of a colorant is preferably 1 to 20 parts by weight per 100 parts by weight of binder resins.

In the toner used in the present invention, various materials can be added for the purpose of coloring or electrostatic charge control. Such materials include, for example, carbon black, black iron oxide, graphite, Nigrosine, metal complexes of monoazo dyes, ultramarine blue, and all sorts of lakes such as Phthalocyanine Blue, Hanza Yellow, Benzo Yellow and Quinacridone. Examples of colorless charge control agents are quarternary ammonium salts and metal complexes for example with salicylic acid. An addition rate of charge control agent or a mixture of charge control agents is preferably 1 to 20 parts by weight per 100 parts by weight of binder resins.

The metallic pigment preferably has a gold tone. This could be achieved with genuine gold. However, it is preferable to use a pigment, which contains copper and zinc, preferably in the form of an alloy, which could thus be referred to as brass or bronze, depending on the composition. Preferably, the ratio of copper and zinc fractions in the alloy varies from about 90:10 to about 70:30. As the zinc fraction in the alloy increases, the metallically golden hue changes from a more reddish to a more yellowish or even greenish gold tone. The color of the gold tone may possibly be intensified through a controlled oxidation of the metal.

The metallic pigment could alternatively have, for example, a silver tone which could result from the pigment containing among other possibilities, aluminum.

The present invention further provides a toner for reproduction of a metallic, preferably golden or silvery, hue by a printing process, especially for electrophotography, preferably prepared by the above-described process and; distinguished by at least one particle which comprises at least one metallic pigment, which has optionally been provided with a coat of silicate, and there-over with an organic layer. The advantages of such a toner have already been described in connection with the process of the present invention. The further developments of the toner according to the present invention, which may specifically be contemplated as particular embodiments on their own or combined, envisage that the organic layer contains: at least one aliphatic acid; that the organic layer contains stearic acid, that the organic layer contains at least one amide of at least one acid, that the organic layer contains at least one salt of at least one acid, that the organic layer contains at least one olefinic material, that the organic layer contains at least one wax, that the wax is a natural wax, that the wax is a synthetic wax, that the pigment is platelet shaped, that the pigment has been coated with the silicate by a sol-gel process, that the toner is a pulverulent toner, that the silicate, titanate, or aluminate comprises about 2% to about 10% of the weight of the metallic pigment, that the pigment has been admixed to a toner material which is clear or transparent, that the pigment has been admixed to a toner material which has an inherent color, that the pigment is about 7 µm in size and that toner particles of the toner material are about 6-12 µm in size, that pigments are each disposed on a surface of a toner particle of the toner material, that the organic layer comprises a polymer, that the pigment is gold colored, that the pigment contains copper and zinc, that the pigment contains copper and zinc as constituents of an alloy, that the ratio of copper and zinc fractions in the alloy varies from about 90:10 to about 70:30, that the pigment is silver colored, and/or that the pigment contains aluminum.

The inventive toner maybe applied to a substrate by a digital printing process, preferably an electrostatic printing process, more preferably by an electrophotographic printing process as described in L. B. Schein, Electrophotography and Development Physics, 2nd Edition, Laplacian Press, Morgan Hill, California, 1996 (ISBN 1-885540-02-7); or, by a coating process, preferably an electrostatic coating process, more preferably by an electromagnetic brush coating process as described in U.S. Patent No. 6,342,273, issued on January 29, 2002. For fixing of the toner to the surface of the substrate a contact fusing method like roller fusing may be used, or preferably a non-contact fusing method like an oven, hot air, radiant, flash, solvent, or microwave fusing.

The process of the present invention and the toner of the present invention will now be more particularly described with reference to some examples which might reveal further inventive features, but to which the present invention is not restricted in its scope.

### EXAMPLE 1:

A platelet-shaped brass pigment having a particle size of about 7 µm was initially provided with a silicate coating, followed by an organic coating of a bis-phenol A based polyester resin mixed with 3% of a charge control agents based on metal complexes with salicylic acid. This coated pigment was then intensively mixed in various concentrations with a clear toner consisting of polymeric binder, charge control agent, and fumed metal oxide having an average particle size of about 12 µm in a high speed mixer for two minutes to obtain a toner having a brass-coated surface.

Thereafter, these toners were mixed with a carrier, developed, and transferred to paper as usual for commercial printing. Finally, each toner was fixed on the paper surface by contactless fixation in an oven.

### EXAMPLE 2:

Example 1 was repeated, except that the toner was fixed with a heated contact fixing apparatus, which comprised a hard roll surface and a Kapton film.

### EXAMPLE 3:

Example 1 was repeated using a toner having a sharp melting point, known from U.S. Publication No. 2002/0115010 A1, published on August 22, 2002, for example. Its 120°C melt viscosity was 12.4 Pa s.

### EXAMPLE 4:

Example 3 was repeated except that a yellow toner was used instead of a clear toner.

### EXAMPLE 5:

Example 4 was repeated using a magenta-colored toner.

### EXAMPLE 6:

Example 5 was repeated using a cyan-colored toner.

### EXAMPLE 7 (Comparative):

A gold-colored print was simulated in toner-based four-color printing. The match was poor. If anything, a dirty yellow was obtained that was devoid of the typical metallic shine.

### EXAMPLE 8:

Example 1 was repeated, except that platelet-shaped brass pigment having a particle size of about 7 µm was initially provided with a silicate coating, followed by a 10% by weight organic coating consisting of bis-phenol A based polyester mixed with 3% of a charge control agents based on metal complexes with salicylic acid. This coated pigment was then intensively mixed in various concentrations with a clear toner consisting of polymeric binder, charge control agent, and fumed metal oxide having an average particle size of about 12 µm in a high speed mixer for two minutes to obtain a toner having a brass-coated surface. The concentration of the brass pigments was varied in 2% steps from 2% to 24%.

Thereafter, these toners were mixed with a carrier, developed, and transferred to paper as usual for commercial printing. Finally, each toner was fixed on the paper surface by contact-less fixation in an oven.

### EXAMPLE 9:

Example 8 was repeated, except that the toner was fixed with a heated contact fixing apparatus, which comprised a hard roll surface and a Kapton film.

### EXAMPLE 10:

Example 9 was repeated, except that that platelet-shaped brass pigment having a particle size of about 7 µm was directly provided with an organic coating consisting of bis-phenol A based polyester mixed with 3% of a charge control agents based on metal complexes with salicylic acid. The toner was fixed to the paper surface by contact-less fixation in an oven.

### EXAMPLE 11:

Example 1 was repeated except that an organic coating of a bis-phenol A based polyester resin was mixed with 3% of a charge control agent based on metal complexes with salicylic acid and 3% Pigment BLUE 15:3 via LUPRETON BLUE SE1163 was added.

### EXAMPLE 12:

Example 1 was repeated except that an organic coating of a bis-phenol A based polyester resin was mixed with 3% of a charge control agent based on metal complexes with salicylic acid and 3% Pigment Red 57:1 was added.

### EXAMPLE 13:

Example 1 was repeated except that an organic coating of a bis-phenol A based polyester resin was mixed with 3% of a charge control agent based on metal complexes with salicylic acid and 3% Pigment Yellow 185 via was added.

### EXAMPLE 14:

Example 4 was repeated except that an organic coating of a bis-phenol A based polyester resin was mixed with 3% of a charge control agent based on metal complexes with salicylic acid and 3% Pigment Yellow 185 was added.

### EXAMPLE 15:

Example 5 was repeated except that an organic coating of a bis-phenol A based polyester resin was mixed with 3% of a charge control agent based on metal complexes with salicylic acid and 3% Pigment Yellow 185 via was added.

### EXAMPLE 16:

Example 6 was repeated except that an organic coating of a bis-phenol A based polyester resin was mixed with 3% of a charge control agent based on metal complexes with salicylic acid and 3% Pigment Yellow 185 via was added.

### EXAMPLE 17:

Example 6 was repeated except that an organic coating of a bis-phenol A based polyester resin was mixed with 3% of a charge control agent based on metal complexes with salicylic acid and 3% Pigment Blue 15:3 via LUPRETON BLUE SE1163 was added.

### EXAMPLE 18:

Example 1 was repeated except that an organic coating of a bis-phenol A based polyester resin was mixed with 3% of a colored charge control agent based Nigrosine was added.

## Claims

1. A toner having a metallic hue and comprising a metallic pigment, said metallic pigment comprising:
a) an organic layer coating selected from an aliphatic acid, an amide of at least one acid, a salt of at least one acid, an olefinic material, a natural wax, a synthetic wax, a polymer, and combinations thereof; which contains optionally a colorant,
b) optionally, a coating of silicate, titanate, or aluminate, provided before the organic layer,
wherein the particle resulting from the pigment and the organic layer coating is combined with toner material consisting of polymer resin, optional charge control agent, and optional fumed metal oxide particles that have been hydrophobized with a coating such as silica, titania, or alumina,
**characterized in that**
the said organic layer coating contains a charge control agent.

2. The toner of claim 1, wherein said metallic pigment comprises either a combination of copper and zinc, or aluminum.

3. The toner of claim 2, wherein said metallic pigment comprises an alloy of copper and zinc in a ratio of from about 90: 10 to about 70:30.

4. The toner of claim 1, wherein said metallic pigment is platelet-shaped.

5. The toner of claim 1, wherein said silicate, titanate, or aluminate comprises from about 2% to about 10%, by weight, of said metallic pigment.

6. The toner of claim 1, wherein said metallic pigment is present at a concentration of from about 5% to about 25%.

7. The toner of claim 1, wherein said metallic pigment is disposed on one surface of said toner.

8. The toner of claim 1, wherein said metallic pigment is about 7 microns in size.

9. The toner particle of claim 8, wherein said toner is from abut 6 to about 12 microns in size.

10. The toner of claim 1, wherein said toner is surface coated with silica, titania, or aluminia at a concentration of from about 0.1% to about 3%.

11. A metallic pigment for use in toner, said metallic pigment comprising:
c) an organic coating layer selected from an aliphatic acid, an amide of at least one acid, a salt of at least one acid, an olefinic material, a natural wax, a synthetic wax, a polymer, and combinations thereof; which contains optionally a colorant and
d) optionally, a coating of silicate, titanate, or aluminate in an amount of from 2% to about 10%, by weight, of said metallic pigment, provided before the organic layer coating,
**characterized in that**
the said organic layer coating contains a charge control agent.

12. A process for the preparation of a toner having a metallic hue, said process comprising the steps of:
a) providing a metallic pigment with
i) an organic coating layer selected from an aliphatic acid, an amide of at least one acid, a salt of at least one acid, an olefinic material, a natural wax, a synthetic wax, a polymer, and combinations thereof, which contains optionally a colorant and
ii) optionally, a coating of silicate, titanate, or aluminate, whereby a coated metallic pigment is obtained before providing the organic layer coating ;
b) combining said coated metallic pigment with a toner material; and
c) optionally surface coating the resulting toner material with a hydrophobic fumed metal oxide,
**characterized in that**
the said organic coating layer contains a charge control agent.

13. The process of claim 12, wherein said surface coating comprises coating the resulting toner material with silica, titania, or aluminia at a concentration of from about 0.1% to about 3%.

14. The process of claim 12, wherein the coating of step a)i) is silicate and is provided using a sol-gel process.

15. The process of claim 12, wherein said metallic pigment comprises either a combination of copper and zinc, or aluminum.

16. The process of claim 15, wherein said metallic pigment comprises an alloy of copper and zinc in a ratio of from about 90:10 to about 70:30.

17. The process of claim 12, wherein said metallic pigment is platelet-shaped.

18. The process of claim 12, wherein said silicate, titanate, or aluminate comprises from about 2% to about 10%, by weight, of said metallic pigment.

19. The process of claim 12, wherein said metallic pigment is present at a concentration of from about 5% to about 25%.

20. The process of claim 12, wherein said metallic pigment is disposed on one surface of said toner.

21. The process of claim 12, wherein said metallic pigment is about 7 microns in size.

22. The process of claim 21, wherein said toner is from abut 6 to about 12 microns in particle size.

## Patentansprüche

1. Toner mit einem metallischen Farbton und mit einem metallischen Pigment, wobei das metallische Pigment umfasst:
a) eine organische Schichtauflage, die ausgewählt ist aus einer aliphatischen Säure, einem Amid aus mindestens einer Säure, einem Salz aus mindestens einer Säure, einem Olefinmaterial, einem natürlichen Wachs, einem synthetischen Wachs, einem Polymer und Kombinationen daraus; und die wahlweise ein Farbmittel enthält;
b) wahlweise eine Auflage aus Silicat, Titanat oder Aluminat, die vor der organischen Schicht bereitgestellt ist;
worin das Partikel, das aus dem Pigment und der organischen Schichtauflage resultiert, mit Tonermaterial kombiniert ist, welches besteht aus Polymerharz, wahlweise einem Ladungskontrollmittel und wahlweise pyrogenen Metalloxidpartikeln, die mit einer Auflage wie Siliciumdioxid, Titandioxid oder Aluminiumoxid hydrophobiert sind;
**dadurch gekennzeichnet, dass**
die organische Schichtauflage ein Ladungskontrollmittel enthält.

2. Toner nach Anspruch 1, worin das metallische Pigment entweder eine Kombination aus Kupfer und Zink oder Aluminium aufweist.

3. Toner nach Anspruch 2, worin das metallische Pigment eine Legierung aus Kupfer und Zink in einem Verhältnis von etwa 90:10 bis etwa 70:30 umfasst.

4. Toner nach Anspruch 1, worin das metallische Pigment plättchenförmig ist.

5. Toner nach Anspruch 1, worin das Silicat, Titanat oder Aluminat etwa 2 bis etwa 10 Gewichtsprozent des metallischen Pigments aufweist.

6. Toner nach Anspruch 1, worin das metallische Pigment in einer Konzentration von etwa 5% bis etwa 25% vorhanden ist.

7. Toner nach Anspruch 1, worin das metallische Pigment auf einer Oberfläche des Toners vorgesehen ist.

8. Toner nach Anspruch 1, worin das metallische Pigment etwa 7 µm groß ist.

9. Tonerpartikel nach Anspruch 8, worin der Toner zwischen etwa 6 und etwa 12 µm groß ist.

10. Toner nach Anspruch 1, worin der Toner oberflächenbeschichtet ist mit Siliciumdioxid, Titandioxid oder Aluminiumoxid in einer Konzentration von etwa 0,1% bis etwa 3%.

11. Metallisches Pigment zur Verwendung in einem Toner, wobei das metallische Pigment umfasst:
c) eine organische Schichtauflage, die ausgewählt ist aus einer aliphatischen Säure, einem Amid aus mindestens einer Säure, einem Salz aus mindestens einer Säure, einem Olefinmaterial, einem natürlichen Wachs, einem synthetischen Wachs, einem Polymer und Kombinationen daraus; und die wahlweise ein Farbmittel enthält; und
d) wahlweise eine Auflage aus Silicat, Titanat oder Aluminat in einer Menge von 2 bis etwa 10 Gewichtsprozent des metallischen Pigments, die vor der organischen Schichtauflage bereitgestellt ist,
**dadurch gekennzeichnet, dass**
die organische Schichtauflage ein Ladungskontrollmittel enthält.

12. Verfahren zur Herstellung eines Toners mit einem metallischen Farbton, wobei das Verfahren die Schritte umfasst:
a) Breitstellen eines metallischen Pigments mit
i) einer organischen Schichtauflage, die ausgewählt ist aus einer aliphatischen Säure, einem Amid aus mindestens einer Säure, einem Salz aus mindestens einer Säure, einem Olefinmaterial, einem natürlichen Wachs, einem synthetischen Wachs, einem Polymer und Kombinationen daraus, und die wahlweise ein Farbmittel enthält; und
ii) wahlweise einer Auflage aus Silicat, Titanat oder Aluminat;
wodurch ein beschichtetes metallisches Pigment erhalten wird, ehe die organische Schichtauflage bereitgestellt ist;
b) Kombinieren des beschichteten metallischen Pigments mit einem Tonermaterial; und
c) wahlweise Oberflächenbeschichtung des resultierenden Tonermaterials mit einem hydrophoben, pyrogenen Metalloxid,
**dadurch gekennzeichnet, dass**
die organische Schichtauflage ein Ladungskontrollmittel enthält.

13. Verfahren nach Anspruch 12, worin der Schritt der Oberflächenbeschichtung den Schritt des Beschichtens des resultierenden Tonermaterials mit Siliciumdioxid, Titandioxid oder Aluminiumoxid in einer Konzentration von etwa 0,1% bis etwa 3% umfasst.

14. Verfahren nach Anspruch 12, worin die Beschichtung gemäß Schritt a)i) aus Silicat besteht und unter Verwendung eines Sol-Gel-Verfahrens erfolgt.

15. Verfahren nach Anspruch 12, worin das metallische Pigment entweder eine Kombination aus Kupfer und Zink oder Aluminium aufweist.

16. Verfahren nach Anspruch 15, worin das metallische Pigment eine Legierung aus Kupfer und Zink in einem Verhältnis von etwa 90:10 bis etwa 70:30 umfasst.

17. Verfahren nach Anspruch 12, worin das metallische Pigment plättchenförmig ist.

18. Verfahren nach Anspruch 12, worin das Silicat, Titanat oder Aluminat etwa 2 bis etwa 10 Gewichtsprozent des metallischen Pigments aufweist.

19. Verfahren nach Anspruch 12, worin das metallische Pigment in einer Konzentration von etwa 5% bis etwa 25% vorhanden ist.

20. Verfahren nach Anspruch 12, worin das metallische Pigment auf einer Oberfläche des Toners vorgesehen ist.

21. Verfahren nach Anspruch 12, worin das metallische Pigment etwa 7 µm groß ist.

22. Verfahren nach Anspruch 21, worin der Toner eine Partikelgröße von etwa 6 bis etwa 12 µm aufweist.

## Revendications

1. Toner ayant une teinte métallique et comprenant un pigment métallique, ledit pigment métallique comprenant :
a) un revêtement organique choisi parmi un acide aliphatique, un amide d'au moins un acide, un sel d'au moins un acide, un matériau oléfinique, une cire naturelle, une cire synthétique, un polymère et des combinaisons de ceux-ci ; qui contient éventuellement une matière colorante,
b) éventuellement, un revêtement de silicate, de titanate ou d'aluminate, appliqué avant la couche organique,
dans lequel la particule formée par le pigment et le revêtement organique est combinée à un matériau de toner constitué d'une résine polymère, d'un agent de contrôle de charge optionnel et d'éventuelles particules d'oxyde métallique pyrogéné qui ont été hydrophobisées par un revêtement de type silice, oxyde de titane ou alumine,
**caractérisé en ce que**
ledit revêtement organique contient un agent de contrôle de charge.

2. Toner selon la revendication 1, dans lequel ledit pigment métallique comprend soit une combinaison de cuivre et de zinc, soit de l'aluminium.

3. Toner selon la revendication 2, dans lequel ledit pigment métallique comprend un alliage de cuivre et de zinc dans un rapport compris entre 90:10 et 70:30 environ.

4. Toner selon la revendication 1, dans lequel ledit pigment métallique est sous forme de lamelle.

5. Toner selon la revendication 1, dans lequel ledit silicate, titanate ou aluminate représente 2 % à 10 % environ, en poids, dudit pigment métallique.

6. Toner selon la revendication 1, dans lequel ledit pigment métallique est présent à une concentration comprise entre 5 % et 25 % environ.

7. Toner selon la revendication 1, dans lequel ledit pigment métallique est disposé sur une surface dudit toner.

8. Toner selon la revendication 1, dans lequel ledit pigment métallique a une taille d'environ 7 microns.

9. Particule de toner selon la revendication 8, dans laquelle ledit toner a une taille comprise entre 6 et 12 microns environ.

10. Toner selon la revendication 1, dans lequel ledit toner est revêtu de silice, d'oxyde de titane ou d'alumine à une concentration comprise entre 0,1 % et 3 % environ.

11. Pigment métallique destiné à être utilisé dans un toner, ledit pigment métallique comprenant :
a) un revêtement organique choisi parmi un acide aliphatique, un amide d'au moins un acide, un sel d'au moins un acide, un matériau oléfinique, une cire naturelle, une cire synthétique, un polymère et des combinaisons de ceux-ci ; qui contient éventuellement une matière colorante, et
b) éventuellement, un revêtement de silicate, de titanate ou d'aluminate en une quantité comprise entre 2 % et 10 % environ, en poids, dudit pigment métallique, appliqué avant le revêtement organique,
**caractérisé en ce que**
ledit revêtement organique contient un agent de contrôle de charge.

12. Procédé de préparation d'un toner ayant une teinte métallique, ledit procédé comprenant les étapes de :
a) préparation d'un pigment métallique ayant
i) un revêtement organique choisi parmi un acide aliphatique, un amide d'au moins un acide, un sel d'au moins un acide, un matériau oléfinique, une cire naturelle, une cire synthétique, un polymère et des combinaisons de ceux-ci, qui contient éventuellement une matière colorante, et
ii) éventuellement, un revêtement de silicate, de titanate ou d'aluminate,
par lequel un pigment métallique revêtu est obtenu avant d'appliquer le revêtement organique ;
b) combinaison dudit pigment métallique revêtu avec un matériau de toner ; et
c) éventuellement, revêtement de la surface du matériau de toner par un oxyde métallique hydrophobisé pyrogéné,
**caractérisé en ce que**
ledit revêtement organique contient un agent de contrôle de charge.

13. Procédé selon la revendication 12, dans lequel ledit revêtement de surface comprend le revêtement du matériau de toner obtenu avec de la silice, de l'oxyde de titane ou de l'alumine à une concentration comprise entre 0,1 % et 3 % environ.

14. Procédé selon la revendication 12, dans lequel le revêtement de l'étape a)i) est un silicate et est appliqué par un procédé sol-gel.

15. Procédé selon la revendication 12, dans lequel ledit pigment métallique comprend soit une combinaison de cuivre et de zinc, soit de l'aluminium.

16. Procédé selon la revendication 15, dans lequel ledit pigment métallique comprend un alliage de cuivre et de zinc dans un rapport compris entre 90: 10 et 70:30 environ.

17. Procédé selon la revendication 12, dans lequel ledit pigment métallique est sous forme de lamelle.

18. Procédé selon la revendication 12, dans lequel ledit silicate, titanate ou aluminate représente 2 % à 10 % environ, en poids, dudit pigment métallique.

19. Procédé selon la revendication 12, dans lequel ledit pigment métallique est présent à une concentration comprise entre 5 % et 25 % environ.

20. Procédé selon la revendication 12, dans lequel ledit pigment métallique est disposé sur une surface dudit toner.

21. Procédé selon la revendication 12, dans lequel ledit pigment métallique a une taille d'environ 7 microns.

22. Procédé selon la revendication 21, dans laquelle ledit toner a une taille de particule comprise entre 6 et 12 microns environ.
